# EUROPÄISCHE PATENTSCHRIFT

(11) **EP 0 552 387 B1**
(45) Veröffentlichungstag und Bekanntmachung des Hinweises auf die Patenterteilung: **08.06.1994**
(21) Anmeldenummer: 92100729.0
(22) Anmeldetag: 17.01.1992
(51) Int. Cl.: F16D 13/64, F16D 69/04

(54) **Kfz-Kupplungs-Mitnehmerscheibe**
Driven clutch plate for automotive vehicle
Disque mené d'embrayage pour véhicule automobile

(43) Veröffentlichungstag der Anmeldung: 28.07.1993
(73) Patentinhaber: TEXTAR KUPPLUNGS- UND INDUSTRIEBELÄGE GMBH, D-51381 Leverkusen (DE)
(72) Erfinder: Strohm, Fritz, Dipl.-Ing., W-5067 Kürten-Eichhof (DE)
(74) Vertreter: Gudel, Diether

(56) Entgegenhaltungen:
- EP-A- 0 351 447
- EP-A- 0 419 329
- EP-A- 0 446 098
- FR-A- 2 453 318
- GB-A- 2 191 831

## Beschreibung

Die Erfindung betrifft eine Mitnehmerscheibe einer Kfz-Kupplung mit einem Trägerblech, mit dem eine elastomere Zwischenschicht verbunden ist, mit der ein Kupplungsbelag verbunden ist, wobei die elastomere Zwischenschicht im wesentlichen aus hydriertem Nitrilkautschuk (HNBR) und/oder einem Fluorelastomer (FPM) besteht und über ein zusammengesetztes Bindemittel mittels Chemosorption mit den angrenzenden Schichten verbunden ist und wobei die als Feder wirkende elatomere Zwischenschicht der Mitnehmerscheibe eine Elastizität in einer Richtung senkrecht zur Ebene der Mitnehmerscheibe mit nichtlinearer Federcharakteristik verleiht und die Verbindungsflächen zwischen der elastomeren Zwischenschicht und den angrenzenden Schichten kleiner sind als die der Zwischenschicht zugewandten Flächen der an sie angrenzenden Schichten (Teilflächenkongruenz).

Eine derartige Mitnehmerscheibe ist in ihren Grundzügen in der EP 0351 447 B1 beschrieben. Verglichen mit bekannten Mitnehmerscheiben zeichnet sie sich insbesondere dadurch aus, daß anstelle der sonst auf die Reibbeläge aufgenieteten Stahlfedern die elastomere Zwischenschicht vorgesehen ist, wodurch die Kupplungsbeläge um einige Millimeter dünner gestaltet werden können, weil sie bis auf ihren Grund abgenutzt werden können, weil es ja keine Nieten mehr gibt. Dennoch hält diese Mitnehmerscheibe allen im Betrieb an sie gestellten Anforderungen, insbesondere in Bezug auf Belastbarkeit auch unter Wärme, Nässe usf. stand, weil, entsprechend dem erwähnten Patent, die elastomere Zwischenschicht mittels Chemosorption mit den angrenzenden Schichten verbunden ist.

Bei dieser europäischen Patentschrift wird auch schon vorgeschlagen, der elastomeren Zwischenschicht eine bestimmte nichtlineare Federcharakteristik dadurch zu erteilen, daß die Flächen nur teilweise kongruent sind. D.h., daß die elastomere Zwischenschicht kleiner ausgebildet ist als die beiden an ihr anliegenden und mit ihre verbundenen Schichten.

Zum Stand der Technik wird auch noch hingewiesen auf die US A 1,898,978, die schon eine Kupplungsscheibe zeigt, deren Reibbelag Einschnitte hat, die sich strahlenförmig und im wesentlichen in radialer Richtung des Belags erstrecken. Der Kupplungsbelag ist hier aber zusammenhängend und die Einschnitte sollen die Geräusche beim Einkuppeln verringern. Sie sollen nicht etwa der Kupplungsscheibe eine bestimmte nichtlineare Federcharakteristik leihen und sie können dies auch nicht, weil sie in einem im wesentlichen nicht elastischem Material angebracht sind, nämlich im eigentlichen Kupplungsbelag.

Einen ähnlichen Stand der Technik beschreibt die US A 2,097,710, wo bei einigen Ausführungsformen die Trägerbleche der dort gezeigten Kupplungsscheib gewellt sind und der Kupplungsbelag in radialer Richtung verlaufende Rillen aufweist. Auch hiermit kann und soll einer Mitnehmerscheibe keine vorbestimmte Federcharakteristik erteilt werden.

Demgegenüber liegt der Erfindung die Aufgabe zugrunde, eine Mitnehmerscheibe mit den Merkmalen des Oberbegriffs von Patentanspruch 1 vorzuschlagen, die bei Beibehaltung der Vorteile der bekannten Mitnehmerscheibe nach der erwähnten europäischen Patentschrift sich durch eine gezielte und definierte, nichtlineare Federcharakteristik auszeichnet, wobei die Mitnehmerscheibe allen im Betrieb an sie gestellten Anforderungen standhält und auch einfach aufgebaut ist.

Zur Lösung dieser Aufgabe ist die Erfindung dadurch gekennzeichnet, daß die elastomere Zwischenschicht ein Profil hat derart, daß bei Auftreten einer Kompressionskraft auf die Mitnehmerscheibe in Richtung senkrecht zu ihrer Ebene zusätzliche Flächenbereiche der Zwischenschicht in Kontakt mit wenigstens einer der ihnen gegenüber liegenden Flächen der beiden angrenzenden Schichten kommen.

Durch diese Maßnahmen erhöhen die erwähnten zusätzlichen Flächenbereiche bei Auftreten der Kompressionskraft nach einem vorbestimmten Federweg die Gegenkraft fortlaufend zusätzlich zu den mit den angrenzenden Schichten über Chemosorption verbundenen Bereichen der elastomeren Zwischenschicht. Diese zusätzlichen Flächenbereiche werden dann nämlich ebenfalls komprimiert. Diese zusätzlichen Flächenbereiche liegen also bei unbelasteter Mitnehmerscheibe nicht direkt an sie angrenzenden Schichten an, sondern unter Ausbildung von Spalten und diese Spalte schließen sich kontinuierlich oder diskontuierlich mit dem Auftreten der Kompressionskraft, wobei ja die mit den angrenzenden Flächen verbundenen Bereiche der elastomeren Zwischenschicht komprimiert werden.

Für die Ausbildung der Z-Profile aus dem Material der elastomeren Zwischenschicht gibt es zahlreiche Möglichkeiten. Denkbar ist beispielsweise ein linsenförmiges Profil. Bevorzugt wird aber ein Z-Profil, weil dieses sich besonders einfach herstellen und insbesondere einfach entformen läßt.

Bei einer einfachsten Ausführungsform ist nur das Trägerblech und eine einzige elastomere Zwischenschicht vorgesehen, mit der der Kupplungsbelag verbunden ist. Insoweit wird es allerdings bevorzugt, wenn das Trägerblech beidseits mit den Profilstücken des Materials der elastomeren Zwischenschicht verbunden ist, so daß die Mitnehmerscheibe beidseits Kupplungsbeläge trägt, wie dies an sich bekannt und üblich ist.

Bei dieser Anordnung wird es bevorzugt, wenn sie symmetrisch ist mit dem Trägerblech als Symmetrieebene, obgleich auch andere Ausgestaltungen möglich sind, bei denen keine Symmetrie gegeben ist. Beispielsweise können die Profilstücke auf der einen Seite des Trägerblechs winkelig zu denjenigen auf der anderen Seite des Trägerblechs versetzt sein usf.

Derartige Mitnehmerscheiben sind im Betrieb relativ hohen Fliehkräften ausgesetzt. Es wird daher bevorzugt, wenn die Profilstücke des Materials der elastomeren Zwischenschicht in radialer Richtung der Mitnehmerscheibe verlaufen. Durch diese Maßnahmen können die Fliehkräfte am besten aufgenommen werden. Es sind aber auch insoweit andere Anordnungen möglich, beispielsweise durch eine netzartige Struktur der Profilstücke der elastomeren Zwischenschicht oder auch durch eine tangentiale Anordnung dieser Profilstücke.

Insoweit wird es, insbesondere aus Gründen der Berechenbarkeit der gewünschten Federcharakteristik, ebenfalls bevorzugt, wenn auch die Verbindungslinien zu den zusätzlichen Flächenbereichen der Profilstücke des Materials der Zwischenschicht in radialer Richtung der Mitnehmerscheibe verlaufen, d.h. die nicht mit den angrenzenden Flächen verbundenen Flächenbereiche der Profilstücke verlaufen entsprechend.

Die Patentansprüche 7 und 8 geben Abmessungen bezüglich der Profilstücke wieder, die sich aufgrund von Berechnungen als gut geeignet erwiesen haben. Anschließend wurden Mitnehmerscheiben mit diesen Merkmalen hergestellt, die sich im Betrieb als hervorragend geeignet erwiesen haben. Diesen Versuchen lag eine gängige Mitnehmerscheibe mit einem Durchmesser von 228 mm zugrunde. Es sei erwähnt, daß die Winkelgrade nach Anspruch 7 auch abgeändert werden können, solange der erfindungsgemäße Zweck erreicht wird. Der Fachmann wird, abhängig von den jeweiligen Gegebenheiten, anhand der Lehre dieser Patentschrift sowie ggfs. anhand weniger Versuche die richtige Dimensionierung herausfinden. Dies gilt auch für die Maßnahmen nach Patentanspruch 8.

Es sei erwähnt, daß erfindungsgemäß ein Kompromiß zwischen zwei sich an und für sich widerstrebenden Forderungen gefunden werden mußte, nämlich einerseits eine möglichst große Verbindungsfläche zwischen dem elastomeren Material und den angrenzenden Schichten zu haben, damit die Verbindung dieses mehrschichtigen Bauelements hochbelastbar wird. Andererseits soll es aber auch unverbundene Bereiche geben, damit die gewünschte Federcharakteristik erreicht wird und als weiteren Freiheitsgrad gibt es die mit den angrenzenden Schichten nicht verbundenen zusätzlichen Flächenbereiche der Profilstücke.

Bei den Abmessungen nach den Patentansprüchen 7 und 8 - siehe auch der folgende spezielle Beschreibungsteil - wurde von einem elastomeren Material mit einer Shore-Härte von 50 und einem Schubmodul von 0,7 N/mm² ausgegangen bei einer maximalen Federkraft der Mitnehmerscheibe von 6.700 N und einem Federweg von 0,7 bis 1,0 mm.

Die Erfindung wird im folgenden anhand eines Ausführungsbeispieles näher erläutert, aus dem sich weitere wichtige Merkmale ergeben. Es zeigt:
- Fig. 1 -: perspektivisch einen Abschnitt einer erfindungsgemäßen Mitnehmerscheibe;
- Fig. 2 -: demgegenüber vergrößert und ebenfalls perspektivisch eines der hierbei verwendeten Segmente aus dem elastomeren Material;
- Fig. 3 -: eine Draufsicht auf die Mitnehmerscheibe zur Erläuterung der Ausbildung der verschiedenen Segmente dieser Scheibe;
- Fig. 4 -: demgegenüber vergrößert eine Ansicht in Richtung des Pfeiles A von Fig. 3;
- Fig. 5 -: die Federcharakteristik dieser Mitnehmerscheibe, wobei über dem in Millimeter gemessenen Federweg die in Newton gemessene Federkraft aufgetragen ist, und zwar bei einer von einem Anwender vorgegebenen Mitnehmerscheibe, bei einer berechneten erfindungsgemäßen Mitnehmerscheibe und bei einer gemessenen erfindungsgemäßen Mitnehmerscheibe.

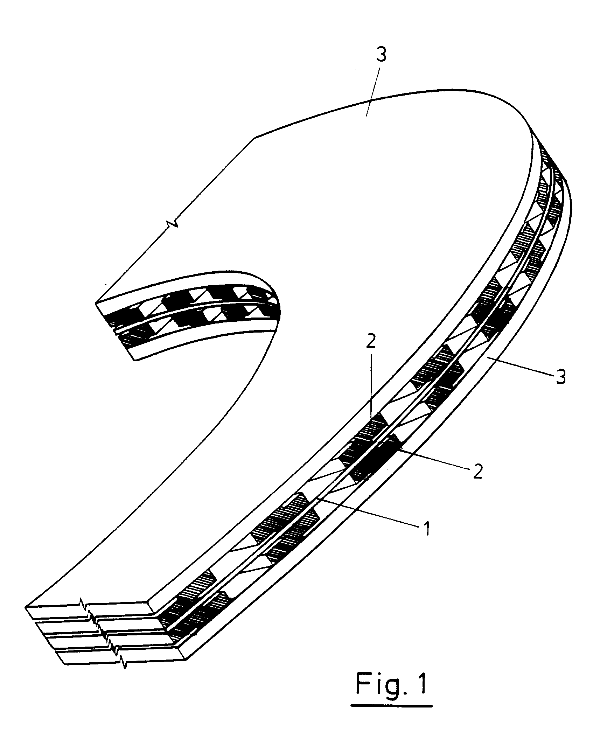

Zunächst sei anhand von Fig. 1 der grundsätzliche Aufbau der erfindungsgemäßen Mitnehmerscheibe erläutert. Diese besteht aus einem Trägerblech 1, mit dem beidseits Profilstücke 2 aus geeignetem elastomerem Material über Chemosorption verbunden ist, wie dies die Lehre der schon mehrfach erwähnten europäischen Patentschrift ist, deren Offenbarung im übrigen zu der Offenbarung dieser Anmeldung zählt.

Mit den Profilstücken 2 sind wiederum Kupplungsbeläge 3 verbunden, und zwar ebenfalls entsprechend der erwähnten EP B1.

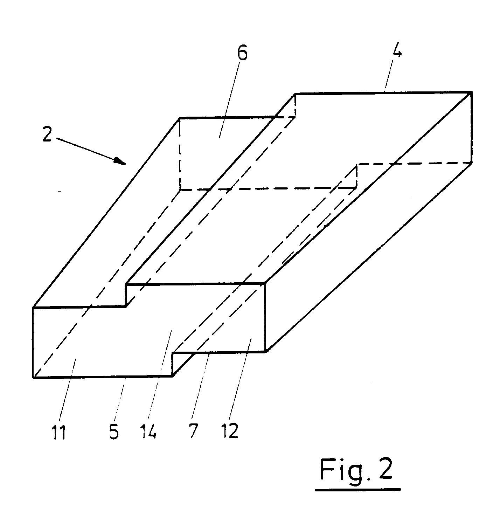

Fig. 2 zeigt als vergrößertes Detail die Z-förmige Profilierung der Profilstücke 2. Sie besitzen jeweils eine Oberseite 4 und eine Unterseite 5 und mit diesen Seiten sind sie mit den angrenzenden Schichten 1, 3 über Chemosorption verbunden.

Über eine Stufe schließen sich an die Flächen 4, 5 weitere Flächen 6, 7 an, so daß, bedingt durch die Stufen, Spalte zwischen den zurückgesetzten Flächen 6, 7 und den diesen gegenüberliegenden Flächen der Schichten 1, 3 ausgebildet werden, und zwar in unbelastetem Zustand der Mitnehmerscheibe.

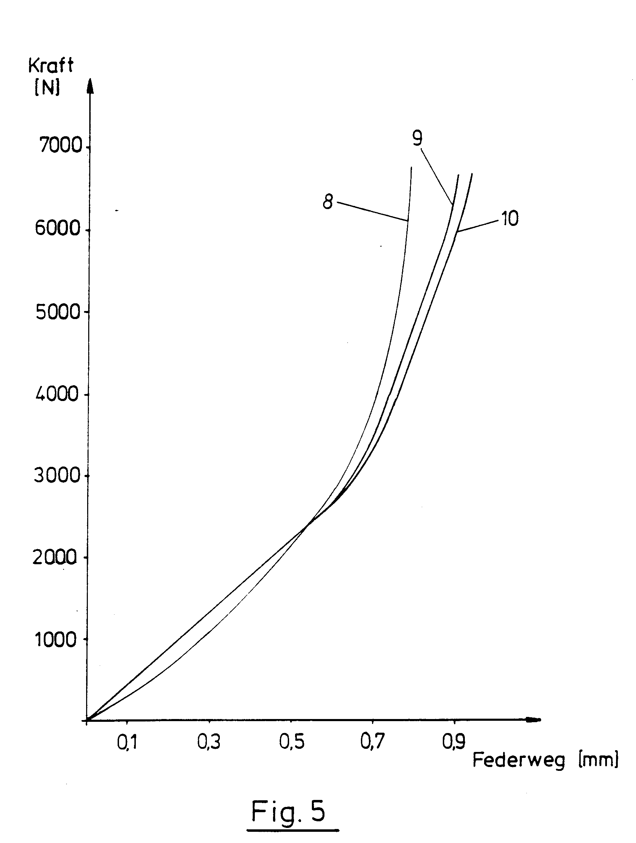

Wirkt auf die Mitnehmerscheibe eine Kompressionskraft in Richtung senkrecht zu ihrer Fläche, so verringert sich der Abstand zwischen den Kupplungsbelägen 3, 3 und die erwähnten Spalte verschwinden, so daß jetzt die zusätzlichen Flächenanteile 6, 7 sich an die anliegenden Schichten 1, 3 anlegen. Dadurch wird die gewünschte definierte, nichtlineare Federcharakteristik erreicht, für die Fig. 5 ein Beispiel zeigt.

In Fig. 5 ist eine vorgegebene Federcharakteristik 8 eingezeichnet, ferner eine entsprechend der erfindungsgemäß ausgebildeten, berechneten Mitnehmerscheibe eine weitere Kurve 9 sowie schließlich eine Kurve 10, die anhand einer erfindungsgemäßen Mitnehmerscheibe gemessen wurde. Es ist ersichtlich, daß bei allen drei Kurven ab etwa einem Federwe von 0,5 oder 0,6 mm die Kennlinie stärker ansteigt. Dies ist dadurch bedingt, daß ab diesem Federweg die zusätzlichen Flächen 6, 7 mit den hinter ihnen befindlichen Teil-Profilstücken 11, 12 für die Federungscharakteristik wirksam werden.

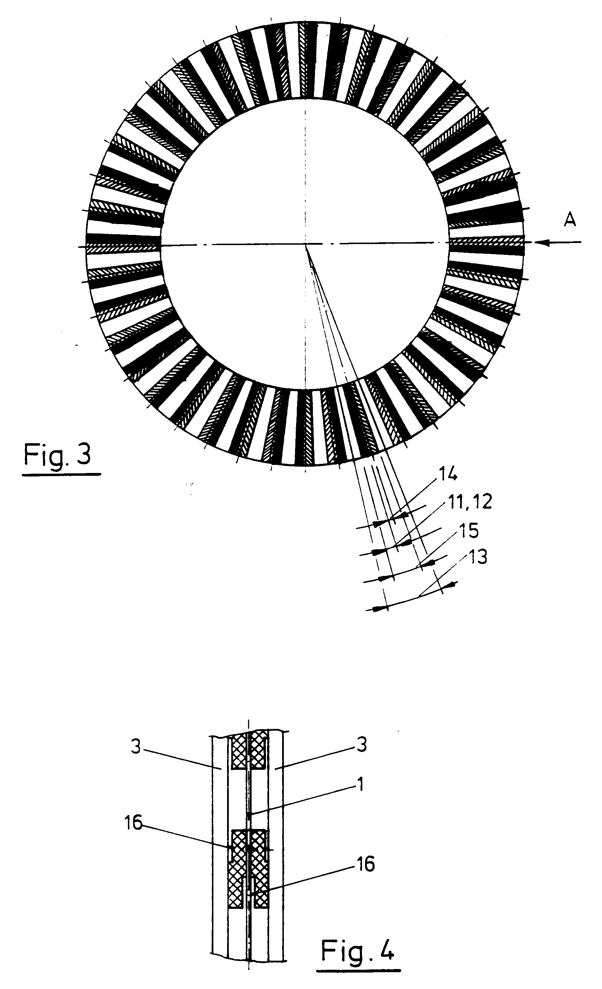

Die Fig. 3 und 4 zeigen weitere Einzelheiten der erfindungsgemäßen Mitnehmerscheibe. Aus Fig. 3 ist ersichtlich, daß insgesamt vierzig Segmente 13 vorgesehen sind, die sich jeweils über einen Winkel von 9° erstrecken. Der mittlere Bereich 14 aus Vollgummi (siehe auch Fig. 2) erstreckt sich über einen Winkel von 1°.

Seitlich neben dem mittleren Bereich 14 erstrecken sich die Teil-Profilstücke 11, 12, und zwar jeweils über Winkel von 2°, so daß der gesamte Winkelbereich 15 der Profilstücke 2 5° einnimmt.

Fig. 4 läßt erkennen, daß die Höhe der Spalte 16 etwa 0,5 mm beträgt (vgl. hierzu auch das Diagramm nach Fig. 5) und die Gesamthöhe der Profilstücke 2 2,3 mm.

Der Innendurchmesser des in Fig. 3 gezeigten Kreisrings beträgt 150 mm und der Außendurchmesser 228 mm.

Aus Gründen der Haltbarkeit und Belastbarkeit wäre an und für sich eine große Verbindungsfläche zwischen dem elastomeren Material und den daran anliegenden Schichten 1, 3, 3 anzustreben. Um aber die gewünschte Nichtlinearität der Federcharakteristik (Kraft-Weg-Diagramm nach Fig. 5) zu erreichen, ist es notwendig, freie Flächen 6, 7 zu haben, die erst nach einer gewissen aufgebrachten Kraft zu tragenden Flächen werden. Das gezeigte Beispiel belegt hierzu, daß ein Flächenverhältnis von 1,25 (5° für den gesamten Winkelbereich 15 des Profilstücks geteilt durch 4° für die beiden Spalte 16) gute Ergebnisse gibt. Dieses Flächenverhältsnis von 1,25 ist daher ein gutes Maß, das in etwa bei diesen Konstruktionen beibehalten bleiben sollte.

Das nichtlineare Verhalten von Kraft und Weg wird erfindungsgemäß dadurch bewirkt, daß die Z-Verformung des Elastomersegments (Profilstück 2) in der Mitte beginnend mit steigender Anpreßkraft zu den Rändern fortlaufend den Spalt schließt und gleichzeitig die Gegenkraft erhöht, wie dies Fig. 5 sehr anschaulich zeigt.

Praktische Prüfungen von Testfahrzeugen unter Extrembelastungen haben die Haltbarkeit der Gummi-/Metall- bzw. der Gummi-/Reibbelagbindung sowie ein problemloses Anfahrverhalten bei einer mit der beschriebenen Mitnehmerscheibe ausgerüsteten Kupplung bestätigt.

## Patentansprüche

1. Mitnehmerscheibe einer Kfz-Kupplung mit einem Trägerblech (1), mit dem eine elastomere Zwischenschicht (2) verbunden ist, mit der ein Kupplungsbelag (3) verbunden ist, wobei die elastomere Zwischenschicht (2) im wesentlichen aus hydriertem Nitrilkautschuk (HNBR) und/oder einem Fluorelastomer (FPM) besteht und über ein zusammengesetztes Bindemittel mittels Chemosorption mit den angrenzenden Schichten (1,3) verbunden ist und wobei die als Feder wirkende elatomere Zwischenschicht (2) der Mitnehmerscheibe eine Elastizität in einer Richtung senkrecht zur Ebene der Mitnehmerscheibe mit nichtlinearer Federcharakteristik verleiht und die Verbindungsflächen (4,5) zwischen der elastomeren Zwischenschicht (2) und den angrenzenden Schichten (1,3) kleiner sind als die der Zwischenschicht (2) zugewandten Flächen der an sie angrenzenden Schichten (1,3) (Teilflächenkongruenz),
**dadurch gekennzeichnet**,
daß die elastomere Zwischenschicht (2) ein Profil hat derart, daß bei Auftreten einer Kompressionskraft auf die Mitnehmerscheibe in Richtung senkrecht zu ihrer Ebene zusätzliche Flächenbereiche (6,7) der Zwischenschicht (2) in Kontakt mit wenigstens einer der ihnen gegenüber liegenden Flächen der beiden angrenzenden Schichten (1,3) kommen.

2. Mitnehmerscheibe nach Anspruch 1,
**dadurch gekennzeichnet**,
daß das Profil ein Z-Profil (2) ist.

3. Mitnehmerscheibe nach Anspruch 1 oder 2,
**dadurch gekennzeichnet**,
daß das Trägerblech (1) beidseits mit den Profilstücken (2) des Materials der elastomeren Zwischenschicht verbunden ist.

4. Mitnehmerscheibe nach Anspruch 3,
**dadurch gekennzeichnet**,
daß die Anordnung symmetrisch ist mit dem Trägerblech (1) als Symmetrieebene.

5. Mitnehmerscheibe nach einem der Ansprüche 1 bis 4,
**dadurch gekennzeichnet**,
daß die Profilstücke (2) des Materials der elastomeren Zwischenschicht in radialer Richtung der Mitnehmerscheibe verlaufen.

6. Mitnehmerscheibe nach Anspruch 5,
**dadurch gekennzeichnet**,
daß auch die Verbindungslinien zu den zusätzlichen Flächenbereichen (6,7) der Profilstücke(2) des Materials der Zwischenschicht in radialer Richtung der Mitnehmerscheibe verlaufen.

7. Mitnehmerscheibenach Anspruch 6,
**dadurch gekennzeichnet**,
daß die Winkelbereiche (13; 15; 11,12; 14), über die sich die Anteile eines der Segmente (13) erstrecken, etwa wie 9° zu 5° zu 4° zu 1° verhalten, wobei die angegebenen Gradzahlen die folgenden Winkelbereiche bedeuten: 9° ist ein Segment (13), 5° ein Profilstück (11,14,12) einschließlich seiner beidseits vorgesehenen, unverbundenen Flächenbereiche (11,12), 4° die beiden rechts und links vorgesehenen, unverbundenen Flächenbereiche (11,12) und 1° der verbundene Flächenbereich (14) des Profilstücks (2).

8. Mitnehmerscheibe nach Anspruch 7,
**dadurch gekennzeichnet**,
daß insgesamt ca. 40 der Segmente (13) vorgesehen sind.

9. Mitnehmerscheibe nach einem der Ansprüche 1 bis 8,
**dadurch gekennzeichnet**,
daß sich die Gesamtbreite (11 + 14 + 12) der Z-Profile (2) zu der Breite (11 + 14) der Spalte (16) etwa wie 5 : 4 = 1,25 verhält.

## Claims

1. A clutch disc for a motor vehicle clutch, the disc comprising a metal carrier sheet (1) connected to an elastomer intermediate layer (2) with which a clutch lining (3) is connected, with the elastomer intermediate layer being essentially composed of hydrated nitrile rubber (HNBR) and/or a fluoroelastomer (FPM) and being connected with the adjacent layers (1,3) by way of a composite binder by means of chemical sorption, the elastomer intermediate layer (2) acting as a spring in the clutch disc imparting it elasticity in a direction perpendicular to the plane of the clutch disc with a non-linear spring characteristic, and the connecting surfaces (4,5) between the elastomer intermediate layer (2) and the adjacent layers (1,3) being smaller than the faces of the adjacent layers facing the intermediate layer (2) (partial congruence), characterized by said elastomer intermediate layer (2) is having such a profile that the exertion of a compressive force on the clutch disc in a direction perpendicular to its plane, causes additional surface regions (6,7) of the intermediate layer (2) to come in contact with at least one of the surfaces of the two adjacent layers (1,3) disposed opposite the intermediate layer.

2. A clutch disc according to claim 1, wherein the profile is a Z profile (2).

3. A clutch disc according to claim 1 or claim 2, wherein the carrier sheet (1) is connected on both sides with the profiled members (2) of the material of said elastomer intermediate layer.

4. A clutch disc according to claim 3, wherein the arrangement is symmetrical, with the carrier plate (1) being the plane of symmetry.

5. A clutch disc according to any of claims 1 to 4, wherein the profiled members (2) of the material of the elastomer intermediate layer extend in the radial direction of the clutch disc.

6. A clutch disc according to claim 5, wherein the connecting lines to the additional surface regions (6,7) of the profiled members (2) of the material of the intermediate layer also extend in the radial direction of the clutch disc.

7. A clutch disc according to claim 6, wherein the angle ranges (13; 15; 11,12; 14) over which the components of one of the segments (13) extend have a ratio of approximately 9° to 5° to 4° to 1°, with the given angular degrees representing the following angle ranges: 9°, a segment (13); 5°, a profiled member (11,14,12) including the non-connected surface regions provided on both its sides; 4°, the non-connected surface regions (11,12) provided to the right and left; and 1°, the connected suface region (14) of the profiled member (2).

8. A clutch disc according to claim 7, wherein a total of approximately 40 of the segments (13) are provided.

9. A clutch disc according to any of claims 1 to 8, wherein the relationship of the overall width (11+14+12) of the Z profiles (2) to the width (11+14) of the gaps (16) is approximately 5 : 4 = 1.25.

## Revendications

1. Disque d'entraînement d'un embrayage de véhicule automobile comportant une tôle de support (1) à laquelle est reliée une couche intermédiaire (2) en élastomère, à laquelle est à son tour reliée une garniture d'embrayage (3), la couche intermédiaire (2) en élastomère étant réalisée essentiellement en caoutchouc nitrile hydrogéné (HBNR) et/ou en élastomère fluoré (FPM), et reliée aux couches voisines (1, 3) au moyen d'un liant composé, par chimiosorption, la couche intermédiaire (2) en élastomère, qui agit en tant que ressort, conférant au disque d'entraînement une élasticité dans une direction perpendiculaire au plan du disque d'entraînement, avec une caractéristique d'élasticité non linéaire, et les surfaces de liaison (4, 5) entre la couche intermédiaire (2) en élastomère et les couches voisines (1, 3), étant plus petites que les surfaces des couches voisines (1, 3), qui sont situées en face de la couche intermédiaire (2) (congruence partielle des surfaces),
caractérisé en ce que la couche intermédiaire (2) en élastomère a un profil tel, que lors de l'apparition d'une force de compression sur le disque d'entraînement, dans la direction perpendiculaire à son plan, des zones de surface supplémentaires (6, 7) de la couche intermédiaire (2) viennent en contact avec au moins une des surfaces opposées des deux couches voisines (1, 3).

2. Disque d'entraînement selon la revendication 1, caractérisé en ce que le profil est un profil en "Z".

3. Disque d'entraînement selon la revendication 1 ou 2, caractérisé en ce que la tôle de support (1) est reliée de part et d'autre aux pièces profilées (2) du matériau de la couche intermédiaire en élastomère.

4. Disque d'entraînement selon la revendication 3, caractérisé en ce que la disposition est symétrique, la tôle de support (1) formant plan de symétrie.

5. Disque d'entraînement selon l'une des revendications 1 à 4, caractérisé en ce que les pièces profilées (2) du matériau de la couche intermédiaire en élastomère s'étendent dans la direction radiale du disque d'entraînement.

6. Disque d'entraînement selon la revendication 5, caractérisé en ce que les lignes de raccordement aux zones de surface supplémentaires (6, 7) des pièces profilées (2) du matériau de la couche intermédiaire s'étendent aussi dans la direction radiale du disque d'entraînement.

7. Disque d'entraînement selon la revendication 6, caractérisé en ce que les zones angulaires (13; 15; 11, 12; 14) sur lesquelles s'étendent les parts d'un segment (13), sont sensiblement dans les proportions de 9° à 5° à 4° à 1°, les valeurs en degrés indiquées représentant les zones angulaires suivantes: 9° représente un segment (13), 5° représente une pièce profilée (11, 14, 12) y compris ses zones de surface (11, 12) non reliées, prévues des deux côtés, 4° représente les deux zones de surface non reliées (11, 12) prévues à droite et à gauche, et 1° représente la zone de surface reliée (14) de la pièce profilée (2).

8. Disque d'entraînement selon la revendication 7, caractérisé en ce que sont prévus environ 40 segments (13) au total.

9. Disque d'entraînement selon l'une des revendications 1 à 8, caractérisé en ce que la largeur totale (11 + 14 + 12) des profilés en "Z" (2) est dans un rapport sensiblement identique à 5 : 4 = 1,25, par rapport à la largeur (11 + 14) des interstices (16).
